Europäisches Patentamt

European Patent Office

Office européen des brevets

(11)  EP 1 431 728 A1

(19)

(12)  **EUROPÄISCHE PATENTANMELDUNG**

(43) Veröffentlichungstag:
  23.06.2004  Patentblatt 2004/26

(51) Int Cl.⁷: **G01H 3/08**, G01N 29/00,
  B60R 16/02, G01W 1/00

(21) Anmeldenummer: 03027359.3

(22) Anmeldetag: 27.11.2003

(84) Benannte Vertragsstaaten:
  **AT BE BG CH CY CZ DE DK EE ES FI FR GB GR
  HU IE IT LI LU MC NL PT RO SE SI SK TR**
  Benannte Erstreckungsstaaten:
  **AL LT LV MK**

(30) Priorität: **19.12.2002  DE 10259979**

(71) Anmelder: **DaimlerChrysler AG**
  **70567 Stuttgart (DE)**

(72) Erfinder:
  • **Bhagavathula, Seshu
    71111 Waldenbuch (DE)**
  • **Katragadda, Shanmukh
    Ganganagar Bangalore- 560 032 (IN)**
  • **Peravali, Ravindra
    89075 Ulm (DE)**
  • **Trost, Jürgen
    72661 Grafenberg (DE)**

(54)  **Verfahren zur Ermittlung eines Strassenzustands während des Fahrbetriebs eines
Kraftfahrzeugs**

(57)     Die Erfindung betrifft ein Verfahren zur Ermittlung eines Straßenzustands während des Fahrbetriebs eines Kraftfahrzeugs. Der beim Abrollen eines Fahrzeugreifens auf einer Fahrbahn erzeugten Schalls wird erfasst. Mittels einem den Schall beschreibenden Schallpegelsignal wird ein Frequenzsignal ermittelt. Das Frequenzsignal wird durch mindestens eine Grenzfrequenz in mindestens zwei Teilbereiche aufgeteilt. Die Teilbereiche werden jeweils einem zugehörenden Frequenzband zugeordnet. Für mindestens zwei Frequenzbänder wird aus dem zugeordneten Teilbereich des Frequenzsignals jeweils ein Intensitätswert ermittelt. Der Intensitätswert ist für die in einem Frequenzband vorhandene Schallintensität kennzeichnend. Aus zwei Intensitätswerten wird ein Intensitätsverhältnis gebildet, indem der erste Intensitätswert des ersten Frequenzbandes durch den zweiten Intensitätswert des zweiten Frequenzbandes dividiert wird. Das Intensitätsverhältnis wird zur Ermittlung des Straßenzustands herangezogen.

Figur

**Beschreibung**

Die Erfindung betrifft ein Verfahren zur Ermittlung eines Straßenzustands während des Fahrbetriebs eines Kraftfahrzeugs nach dem Oberbegriff des Anspruchs 1.

Aus der gattungsbildenden DE 42 13 221 C2 ist ein Verfahren zum berührungslosen Ermitteln der Benetzung einer Fahrbahnoberfläche mit Wasser bekannt. Mittels eines Schallaufnehmers wird das Spritzwassergeräusch oder das Abrollgeräusch wenigstens eines Kraftfahrzeugrades erfasst und ein dem erfassten Geräusch entsprechendes Ausgangssignal erzeugt. Aus diesem Ausgangssignal wird mittels einer Fouriertransformation die spektrale Verteilung des erfassten Geräuschs ermittelt. Aus der spektralen Verteilung wird ein Frequenzband herausgeschnitten und der Amplitudenmittelwert der spektralen Verteilung innerhalb des Frequenzbandes berechnet. Diesem Mittelwert wird mittels eines Kennfeldes ein Wert für die Benetzung der Fahrbahn zugeordnet. Hierbei können weitere Größen wie beispielsweise Fahrgeschwindigkeit, Motordrehzahl, Lenkwinkel, Reifentyp, Reifentemperatur, Reifendruck oder Beladungszustand als Korrekturgrößen berücksichtigt werden. Zusätzlich können Störgeräusche wie das Motorgeräusch des Antriebsmotors ermittelt und kompensiert werden.

Ausgehend von diesem Stand der Technik ist es die Aufgabe der Erfindung eine genauere und zuverlässigere Ermittlung eines Straßenzustands während des Fahrbetriebs eines Kraftfahrzeugs zu ermöglichen.

Diese Aufgabe wird erfindungsgemäß durch ein Verfahren mit den Merkmalen des Anspruchs 1 gelöst.

Beim Abrollen eines Fahrzeugs auf einer Fahrbahn werden verschiedene Geräusche erzeugt. Dies sind neben dem eigentlichen Abrollgeräusch, welches aufgrund des direkten Kontaktes zwischen Fahrzeugreifen und Fahrbahn entsteht, beispielsweise zusätzliche Windgeräusche, welche durch die Relativbewegung zwischen Umgebungsluft und Fahrzeugrad entstehen, oder Spritzwassergeräusche, welche durch einen Aufprall der vom Reifen abspritzenden Wassertropfen auf ein Fahrzeugbauteil entstehen. Der Schall dieser verschiedenen, sich überlagernden Geräusche wird erfasst und es wird ein Schallpegelsignal erzeugt, welches den erfassten Schall beschreibt. Die Erzeugung des Schallpegelsignals kann mit jedem geeigneten Schallaufnehmer wie beispielsweise mit einem Mikrofon oder einem anderen Schwingungsaufnehmer erfolgen. Abhängig von der Art und dem Anbringungsort des Schallaufnehmers sind die verschiedenen Geräusche unterschiedlich stark gewichtet, aufgrund der Schallübertragungsstrecke gefiltert und eventuell zusätzlich von zahlreichen Störgeräuschen begleitet. Um möglichst nur das oder die gewünschten Geräusche, insbesondere das eigentliche Abrollgeräusch der weiteren Auswertung zuzuführen, kann eine Filterung oder eine andere Vorverarbeitung des Schallpegelsignals erfolgen. Dies ist jedoch nicht zwingend erforderlich.

Ausgehend vom Schallpegelsignals, insbesondere von einem zeitlich begrenzten Abschnitt des Schallpegelsignals wird dann ein Frequenzsignal ermittelt, welches den zeitlich begrenzten Abschnitt des Schallpegelsignals beschreibt. Dies kann beispielsweise mittels einer diskreten Fouriertransformation erfolgen. Das Frequenzsignal wird durch mindestens eine Grenzfrequenz in verschiedene Teilbereiche aufgeteilt. Jeder dieser Teilbereiche ist jeweils einem zugehörenden Frequenzband zugeordnet. Für mindestens zwei Frequenzbänder wird aus zugeordneten Teilbereichen des Frequenzsignals jeweils ein Intensitätswert ermittelt, welcher für die innerhalb des zugeordneten Frequenzbands und gegebenenfalls innerhalb eines vorgebbaren zeitlichen Abschnitts vorhandene Schallintensität kennzeichnend ist. Aus zwei Intensitätswerten wird ein Intensitätsverhältnis ermittelt, indem ein erster Intensitätswert eines ersten Frequenzbandes durch einen zweiten Intensitätswert eines zweiten Frequenzbandes dividiert wird.

Abhängig von der Zahl der Intensitätswerte können mehrere Intensitätsverhältnisse ermittelt werden. Als Intensitätswerte können beispielsweise arithmetische oder geometrische Amplitudenmittelwerte, andere gewichtete Mittelwerte oder Autokorrelationswerte des Frequenzsignals verwendet werden, wobei zum Ermitteln der Intensitätswerte beispielsweise die Standardabweichung oder die Varianz des Frequenzsignals zusätzlich berücksichtigt werden können. Die aus den Intensotätswerten gewonnenen Intensitätsverhältnisse werden zur Ermittlung des Straßenzustands herangezogen. Als ein Straßenzustand wird beispielsweise ermittelt, welcher Fahrbahnbelag vorliegt oder ob die Straße nass ist.

Zur Ermittlung des Straßenzustands können zusätzlich weitere Größen, wie beispielsweise die Außentemperatur oder fahrdynamische Größen erfasst und herangezogen werden.

Vorteil des erfindungsgemäßen Verfahrens ist es, dass der Straßenzustand genau und zuverlässig ermittelt werden kann. Das erfindungsgemäße Verfahren ist zudem sehr robust gegenüber Störungen und unabhängig von oder zumindest unempfindlich gegenüber einer Veränderung vieler weiterer Parameter, wie beispielsweise der Fahrzeuggeschwindigkeit, der Beladung des Fahrzeugs, des Reifentyps, der Profiltiefe oder des Reifendrucks.

In einer vorteilhaften Ausgestaltung der Erfindung wird ein Vergleich mindestens eines ermittelten Intensitätsverhältnisses mit einem vorgebbaren Wertebereich durchgeführt. Das Vergleichsergebnis wird zur Ermittlung des Straßenzustands herangezogen, insbesondere wird mittels dieses Vergleichs der Straßenzustand direkt, d.h. ohne weitere Größen hinzuzuziehen ermittelt. Um den direkt ermittelten Straßenzustand zu präzisieren oder zu verifizieren können in einem nachfolgenden Schritt weitere Größen hinzugezogen werden.

In einer einfachen Ausführungsform kann ohne Berücksichtigung weiterer Größen, nur durch einen Vergleich eines ermittelten Intensitätsverhältnisses mit einem vorgebbaren Wertebereich und ohne die Durchführung weiterer nachfolgender Auswerteschritte der Straßenzustand ermittelt werden. Hierzu ist eine Zuordnung eines Straßenzustands zu einem Wertebereich des Intensitätsverhältnisses der Intensitätswerte zweier Frequenzbänder vorgebbar. Vorteil dieser Ausführungsform ist die Möglichkeit, den Straßenzustand sehr schnell und einfach zu ermitteln.

Anstelle des Vergleichs eines Intensitätsverhältnisses mit einem oder mehreren vorgebbaren Wertebereichen können mehrere ermittelte Intensitätsverhältnisse mit mehreren vorgebbaren Wertebereichen verglichen werden. Die Vergleichsergebnisse werden zur Ermittlung des Straßenzustands herangezogen, insbesondere wird in einer einfachen Ausführungsform aus den Vergleichsergebnissen direkt und auf den Straßenzustand geschlossen.

In einer vorteilhaften Weiterbildung der Erfindung wird als Frequenzsignal ein Spektrogramm ermittelt. Das Spektrogramm wird mittels mindestens einer Grenzfrequenz in mindestens zwei Frequenzbänder aufgeteilt. Als Intensitätswert für ein Frequenzband kann ein gewichteter Mittelwert der in dem Frequenzband enthaltenen spektralen Energieverteilung ermittelt werden. Aus dem Verhältnis der Intensitätswerte der beiden Frequenzbänder wird dann wiederum auf den Straßenzustand geschlossen. Diese Weiterbildung der Erfindung erlaubt ausgehend von der Erfindung gemäß Anspruch 1 eine genauere und zuverlässigere Ermittlung des Straßenzustands, welche zudem eine Berücksichtigung zeitabhängiger Effekte ermöglicht, falls das Spektrogramm eine entsprechende zeitliche Auflösung aufweist.

In einer Weiterbildung des erfindungsgemäßen Verfahrens wird für mindestens ein Frequenzband eine quadratische Matrix ermittelt. Jedem Element dieser Matrix ist ein Frequenzsubband, d.h. ein vorgebbarer Bereich des Frequenzraums und ein Zeitsubabschnitt, d.h. ein vorgebbarer Bereich in der Zeit zugeordnet. Ein Element der Matrix ist kennzeichnend für die Intensität des Frequenzsignals in dem dem Matrixelement zugeordneten Frequenzsubband und in dem dem Matrixelement zugeordneten Zeitsubabschnitt. Als Intensitätswert wird die Norm einer Matrix ermittelt. Vorzugsweise wird für jedes der durch die Grenzfrequenzen vorgegebenen Frequenzbänder ein solche quadratische Matrix und aus den Matrizen als Intensitätswerte deren jeweilige Norm ermittelt. Vorzugsweise wird als Norm der Matrizen die Frobenius-Norm ermittelt.

Eine solche Matrix ist beispielsweise so aufgebaut, dass der Zeile 1 das Frequenzsubband von 0 bis 99 Hz, der Zeile 2 das Frequenzsubband von 10 bis 199 Hz, der Zeile 3 das Frequenzsubband von 200 bis 299 Hz usw. zugeordnet sind. In vergleichbarer Weise ist der Spalte 1 der Zeitsubabschnitt von $t_0$ bis $t_0 + 10$ ms der Spalte 2 der Zeitsubabschnitt von $t_0 + 5$ ms bis $t_0 + 15$ ms der Spalte 3 der Zeitsubabschnitt von $t_0 + 10$ ms bis $t_0 + 20$ usw. zugeordnet.

Die den Spalten zugeordneten Zeitspannen können überlappen, aneinander anschließen oder lückenhaft angeordnet sein. Eine umgekehrte Anordnung der Reihenfolge der Zeilen oder der Spalten oder ein Vertauschen der Zeilen mit den Spalten hat keinen prinzipiellen Einfluss auf das erfindungsgemäße Verfahren und ist daher möglich.

Wurde das Frequenzsignal durch n Grenzfrequenzen unterteilt, so werden n+1 Matrizen erzeugt und zu jeder Matrix wird ein Intensitätswert ermittelt. Aus den n+1 Intensitätswerten werden durch Quotientenbildung die Intensitätsverhältnisse ermittelt. Die Intensitätsverhältnisse werden zur Ermittlung des Straßenzustands herangezogen.

Vorteil dieser Weiterbildung der Erfindung ist es, dass in wesentlichem Maße die Effekte, welche ein nichtstationäres Verhalten und Einschwingeffekte bei der Schallerzeugung zwischen Fahrbahn und Reifen bewirken, vollständig eliminiert oder zumindest verringert werden können.

In einer Ausgestaltung wird jedes Frequenzband in $2^k$ Frequenzsubbänder aufgeteilt, wobei k eine natürliche Zahl ist. Zudem wird der einer Matrix zugeordnete Zeitabschnitt in $2^k$ Zeitsubabschnitte aufgeteilt. Hierdurch umfasst eine Matrix $2^k$ Spalten und $2^k$ Zeilen. Dies ermöglicht eine einfache und effiziente Ermittlung der Normen der Matrizen und somit eine schnelle Ermittlung des Straßenzustands.

Vorzugsweise ist k größer als 1, was die Genauigkeit und/oder die Zuverlässigkeit der Straßenzustandsbestimmung erhöht. Andererseits wird k jedoch nicht allzu groß gewählt, um den Rechenaufwand zu begrenzen.

In einer vorteilhaften Ausgestaltung der Erfindung werden zur Ermittlung des Straßenzustands jeweils die ermittelten Intensitätsverhältnisse benachbarter Frequenzbänder herangezogen. Hierdurch ist eine gute Separierung der Straßenzustände wie beispielsweise die Erkennung unterschiedlicher Wasserfilmstärken auf dem Fahrbahnbelag oder unterschiedlicher Rauhigkeiten des Fahrbahnbelags möglich.

Um die Ermittlung des Straßenzustandes zu vereinfachen, ist es vorteilhaft, dass alle durch die ein oder mehreren Grenzfrequenzen vorgebbaren Frequenzbänder die gleiche Bandbreite aufweisen.

Werden mehrere Intensitätsverhältnisse zur Ermittlung des Straßenzustands herangezogen, so ist eine verfeinerte und/oder genauere Ermittlung des Straßenzustands möglich. Beispielsweise können bei einer Aufteilung des Frequenzsignals in vier Frequenzbänder A, B, C, D die Intensitätsverhältnisse $I_A/I_B$, $I_B/I_C$, $I_C/I_D$, und eventuell zusätzlich die Intensitätsverhältnisse $I_A/I_C$, $I_A/I_D$ und $I_B/I_D$ zur Ermittlung des Straßenzustandes herangezogen werden.

Als Straßenzustand können beispielsweise die Dicke eines auf der Fahrbahn befindlichen Wasserfilms, die Aggregatzustände Schnee oder Eis, die Art des Fahrbahnbelags, und insbesondere der maximal mögliche Reibwert ermittelt werden. Es kann zwischen unterschiedlichen Straßenbelägen wie beispielsweise Asphalt, Beton und Kopfsteinpflaster unterschieden werden. Eine Erkennung der Dicke eines die Fahrbahn benetzenden Wasserfilms ist besonders vorteilhaft, da der maximal mögliche Reibwert zwischen Reifen und Fahrbahn stark von dieser Benetzungsdicke abhängt.

Da das erfindungsgemäße Verfahren nur einen geringen Rechenaufwand erfordert und somit nur wenig Rechenzeit benötigt, kann es sehr schnell ausgeführt werden, so dass der ermittelte Straßenzustand nahezu ohne Zeitverzug, d.h. in Echtzeit zur Verfügung steht.

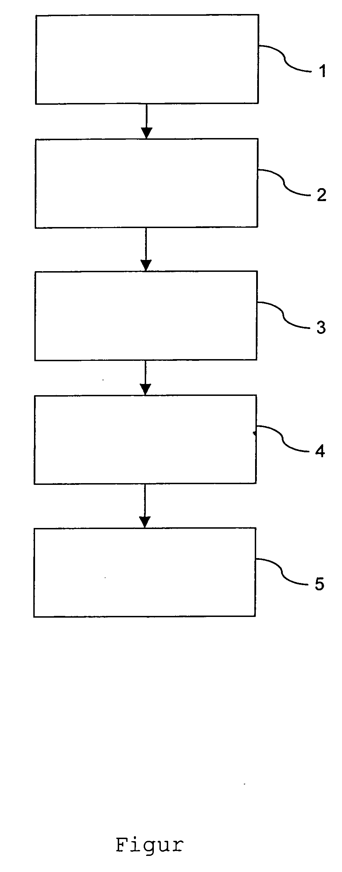

Eine vorteilhafte Ausführungsform der Erfindung wird anhand der Figur näher erläutert.

Die Figur zeigt einen Flussdiagramm einer vorteilhaften Ausführungsform des erfindungsgemäßen Verfahrens. In Schritt 1 wird der beim Abrollen eines Fahrzeugs auf der Fahrbahn erzeugte Schall erfasst und ein den erfassten Schall beschreibendes Schallpegelsignal erzeugt. Die Erfassung des Schalls erfolgt mittels eines Schallaufnehmers, welcher im Radkasten oder in der Nähe des Reifens angeordnet ist. Das den Schall beschreibende Schallpegelsignal ist beispielsweise das Ausgangssignal des Schallaufnehmers, wobei die Amplitude des Schallpegelsignals proportional zur Schallamplitude ist. Das Schallpegelsignal hat eine vorgebbare Frequenzbandbreite, welche beispielsweise 8 kHz beträgt.

In Schritt 2 wird ein zeitlich begrenzter Abschnitt des Schallpegelsignals in mehrere vorgebbare Zeitsubabschnitte aufgeteilt. Für jeden der Zeitsubabschnitte wird ein Leistungsspektrum berechnet. Die Berechnung des Leistungsspektrums kann mittels folgender Gleichung erfolgen:

$$P(t,\omega) = \left| \frac{1}{\sqrt{2\pi}} \int e^{-j\omega\tau} s(\tau) h(t-\tau) d\tau \right|^2$$

Hierbei ist s(t) das Schallpegelsignal, und h(t) ist eine Fensterfunktion, mittels welcher die Zeitsubabschnitte vorgegeben werden.

Ein Spektrogramm erhält man aus dem Leistungsspektrum, indem das Zeitfenster der Fensterfunktion schrittweise verschoben wird und die erhaltenen Leistungsspektren aneinandergereiht aufgetragen werden.

Die analoge Funktion des Leistungsspektrums wird im Frequenzraum diskretisiert, d.h. es wird im Frequenzraum in vorgebbare, einem Frequenzsubband zugeordnete Teilabschnitte aufgeteilt. Die Signalamplitude wird innerhalb eines Teilabschnitts gemittelt und der Mittelwert dem Teilabschnitt zugewiesen.

In einer alternativen Ausführungsform ist bereits das Schallpegelsignal ein digitalisiertes Signal, welches mittels eines Analog-Digital-Wandlers erzeugt werden kann. In diesem Fall erfolgt die Berechnung des diskreten Spektrogramms mittels einer der angegebenen Integration entsprechenden Summation.

Als Ergebnis des Schrittes 2 erhält man ein Spektrogramm, welches als Matrixelemente jeweils einen Zahlenwert für die innerhalb eines Zeitsubabschnittes und innerhalb eines Frequenzsubbandes vorhandene Schallintensität aufweist.

Die Zeitsubabschnitte und Frequenzsubbänder können so vorgegeben werden, dass sich benachbarte Zeitsubabschnitte oder benachbarte Frequenzsubbänder überlappen, aneinander anschließen oder ein Zwischenraum zwischen benachbarten Zeitsubabschnitten oder Frequenzsubbändern vorhanden ist.

In Schritt 3 wird das Frequenzsignal, d.h. das nun vorliegende diskrete Spektrogramm durch $2^k-1$ Grenzfrequenzen in $2^k$ Frequenzbänder unterteilt. Die Grenzfrequenzen sind äquidistant im Frequenzraum angeordnet.

Beispielsweise wird das Spektrogramm durch drei Grenzfrequenzen in vier Frequenzbänder und somit in vier Submatrizen unterteilt. Die Anzahl der Frequenzbänder, die Anzahl der Frequenzsubbänder und die Anzahl der Zeitsubabschnitte werden so vorgegeben, dass jede Submatrix quadratisch ist, d.h. dass jede Submatrix gleich viele Zeilen wie Spalten enthält.

In Schritt 4 wird zu jeder Submatrix die Frobenius-Norm als ein für die Schallintensität innerhalb des zugehörenden Frequenzbandes kennzeichnender Wert berechnet:

$$\|X\| = \sqrt{Spur(X^T X)} = \sqrt{\sum_{i=1}^{m} \sum_{j=1}^{n} |x_{ij}|^2}$$

In Schritt 5 werden die Verhältnisse der Frobenius-Normen der vier Submatrizen, d.h. die Intensitätsverhältnisse $X_N/X_{N+1}$ der Intensitätswerte der vier Frequenzbänder gebildet. Zur Ermittlung des Straßenzustands werden die ermittelten Intensitätsverhältnisse mit in einer Tabelle abgelegten vorgebbaren Intensitätsverhältnisbereichen verglichen. Ein vorgebbarer Intensitätsverhältnisbereich ist durch die Tabelle jeweils einem vorgebbaren Straßenzustand oder einem vorgebbaren Straßenzustandsmerkmal oder einem vorgebbaren maximalen Reibwert zugeordnet.

Anstelle einer Tabelle kann auch eine beliebige andere bekannte Form der Zuordnung zwischen Straßenzustand oder diesen beschreibenden Merkmalen und den ermittelten Intensitätsverhältnissen vorgegeben werden. Beispielsweise kann eine funktionale Zuordnung, insbesondere eine Schwellwertfunktion vorgegeben werden.

**Patentansprüche**

1. Verfahren zur Ermittlung eines Straßenzustands während des Fahrbetriebs eines Kraftfahrzeugs, wobei

   - zumindest ein Teil eines beim Abrollen eines Fahrzeugreifens auf einer Fahrbahn erzeugten Schalls erfasst wird, und
   - mittels des erfassten Schalls ein diesen Schall beschreibendes Schallpegelsignal erzeugt wird, und
   - ein das Schallpegelsignal beschreibendes Frequenzsignal ermittelt wird,

   **dadurch gekennzeichnet, dass**

   - das Frequenzsignal durch mindestens eine Grenzfrequenz in mindestens zwei Teilbereiche aufgeteilt wird, welche jeweils einem zugehörenden Frequenzband zugeordnet werden, und
   - für mindestens zwei Frequenzbänder aus dem zugeordneten Teilbereich des Frequenzsignals jeweils ein Intensitätswert ermittelt wird, welcher für die in einem Frequenzband vorhandene Schallintensität kennzeichnend ist, und
   - ein Intensitätsverhältnis gebildet wird, indem ein erster Intensitätswert eines ersten Frequenzbandes durch einen zweiten Intensitätswert eines zweiten Frequenzbandes dividiert wird, und
   - das Intensitätsverhältnis zur Ermittlung des Straßenzustands herangezogen wird.

2. Verfahren nach Anspruch 1, **dadurch gekennzeichnet, dass** die Ermittlung des Frequenzsignals ausgehend von einem zeitlich begrenzten Abschnitt des Schallpegelsignals erfolgt.

3. Verfahren nach einem der Ansprüche 1 oder 2, **dadurch gekennzeichnet, dass**

   - ein Vergleich mindestens eines ermittelten Intensitätsverhältnisses mit einem einem Straßenzustand zugeordneten vorgebbaren Wertebereich durchgeführt wird, und
   - mittels dieses Vergleichs auf den tatsächlichen Straßenzustand geschlossen wird.

4. Verfahren nach einem der Ansprüche 1 bis 3, **dadurch gekennzeichnet, dass** als Frequenzsignal ein Spektrogramm ermittelt wird.

5. Verfahren nach einem der Ansprüche 1 bis 4, **dadurch gekennzeichnet, dass**

   - für ein Frequenzband eine quadratische Matrix ermittelt wird, wobei ein Matrixelement kennzeichnend für die Intensität des erfassten Schallpegelsignals innerhalb eines vorgebbaren Frequenzsubbandes und innerhalb eines vorgebbaren Zeitsubabschnittes ist, und
   - als ein Intensitätswert die Norm der Matrix ermittelt wird.

6. Verfahren nach Anspruch 5, **dadurch gekennzeichnet, dass** die Matrix $2^k$ Zeilen und $2^k$ Reihen aufweist, wobei k eine natürliche Zahl ist.

7. Verfahren nach einem der vorhergehenden Ansprüche, **dadurch gekennzeichnet, dass** jeweils die Intensitätsverhältnisse benachbarter Frequenzbänder ermittelt und zur Ermittlung des Straßenzustands herangezogen werden.

8. Verfahren nach einem der vorhergehenden Ansprüche, **dadurch gekennzeichnet, dass** alle durch die ein oder mehreren Grenzfrequenzen vorgebbaren Frequenzbänder die gleiche Bandbreite aufweisen.

9. Verfahren nach einem der vorhergehenden Ansprüche, **dadurch gekennzeichnet, dass** als Straßenzustand die Dicke eines auf der Fahrbahn befindlichen Wasserfilms, das Vorhandensein von Schnee oder Eis auf der Fahrbahn und/oder die Art des Fahrbahnbelags ermittelt wird.

10. Verfahren nach einem der vorhergehenden Ansprüche, **dadurch gekennzeichnet, dass** als Straßenzustand der maximal mögliche Reibbeiwert zwischen Fahrbahn und Fahrzeugreifen ermittelt wird.

Figur

EP 1 431 728 A1

| | Europäisches Patentamt | EUROPÄISCHER RECHERCHENBERICHT | Nummer der Anmeldung EP 03 02 7359 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 1997, no. 02, 28. Februar 1997 (1997-02-28) -& JP 08 261993 A (SUMITOMO ELECTRIC IND LTD), 11. Oktober 1996 (1996-10-11) | 1-4,7,9 | G01H3/08 G01N29/00 B60R16/02 G01W1/00 |
| A | * Zusammenfassung * --- | 8 | |
| A | PATENT ABSTRACTS OF JAPAN vol. 1996, no. 11, 29. November 1996 (1996-11-29) -& JP 08 175334 A (NISSAN MOTOR CO LTD), 9. Juli 1996 (1996-07-09) * Zusammenfassung * --- | 9 | |
| A | DE 37 28 708 A (BOSCH GMBH ROBERT) 23. März 1989 (1989-03-23) * Anspruch 1 * --- | 10 | |
| A,D | DE 42 13 221 A (PORSCHE AG) 28. Oktober 1993 (1993-10-28) * Anspruch 1 * ----- | 1 | |

RECHERCHIERTE SACHGEBIETE (Int.Cl.7)

G01H
G01N

Der vorliegende Recherchenbericht wurde für alle Patentansprüche erstellt

| Recherchenort DEN HAAG | Abschlußdatum der Recherche 5. April 2004 | Prüfer Anderson, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie,übereinstimmendes Dokument

EPO FORM 1503 03 82 (P04C03)

**ANHANG ZUM EUROPÄISCHEN RECHERCHENBERICHT**
**ÜBER DIE EUROPÄISCHE PATENTANMELDUNG NR.**   EP 03 02 7359

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-04-2004

| Im Recherchenbericht angeführtes Patentdokument | | Datum der Veröffentlichung | Mitglied(er) der Patentfamilie | | Datum der Veröffentlichung |
|---|---|---|---|---|---|
| JP 08261993 | A | 11-10-1996 | JP | 3473158 B2 | 02-12-2003 |
| JP 08175334 | A | 09-07-1996 | KEINE | | |
| DE 3728708 | A | 23-03-1989 | DE | 3728708 A1 | 23-03-1989 |
| | | | WO | 8901888 A1 | 09-03-1989 |
| DE 4213221 | A | 28-10-1993 | DE | 4213221 A1 | 28-10-1993 |

Für nähere Einzelheiten zu diesem Anhang : siehe Amtsblatt des Europäischen Patentamts, Nr.12/82